# EUROPÄISCHE PATENTSCHRIFT

(11) **EP 3 511 131 B1**
(45) Veröffentlichungstag und Bekanntmachung des Hinweises auf die Patenterteilung: **28.06.2023**
(21) Anmeldenummer: 18151369.8
(22) Anmeldetag: 12.01.2018
(51) Int. Cl.: B25J 15/02, B24B 13/005, B25J 15/10

(54) **VORRICHTUNG UND VERFAHREN ZUM HANDHABEN VON BRILLENGLÄSERN SOWIE VERFAHREN ZUR HERSTELLUNG VON BRILLENGLÄSERN**
DEVICE AND METHOD FOR HANDLING SPECTACLE LENSES AND METHOD FOR THE MANUFACTURE OF SPECTACLE LENSES
DISPOSITIF ET PROCÉDÉ DE MANIPULATION DE VERRES DE LUNETTES AINSI QUE PROCÉDÉ DE FABRICATION DE VERRES DE LUNETTES

(43) Veröffentlichungstag der Anmeldung: 17.07.2019
(73) Patentinhaber: Carl Zeiss Vision International GmbH, 73430 Aalen (DE)
(72) Erfinder: KURZ, Norbert, 73434 Aalen (DE)
(74) Vertreter: Patentanwälte Bregenzer und Reule Partnerschaftsgesellschaft mbB

(56) Entgegenhaltungen:
- DE-A1-102012 220 294
- JP-A- 2008 110 284
- JP-A- 2011 167 806
- JP-A- 2012 076 161
- JP-U- H0 164 388
- US-A1- 2012 175 903

## Beschreibung

Die Erfindung betrifft eine Vorrichtung zum Handhaben von Brillengläsern gemäß Oberbegriff des Anspruchs 1 sowie ein Verfahren zur Handhabung von Brillengläsern und ein Verfahren zur Herstellung von Brillengläsern.

Eine Handhabungsvorrichtung mit den körperlichen Merkmalen des Oberbegriffs des Anspruchs 1, die für das Erfassen achssymmetrischer Gegenstände geeignet ist und insbesondere zum Erfassen von Glasphiolen Anwendung finden soll, ist aus der DE 10 2012 220 294 A1 bekannt. Ein Verfahren zur Handhabung von optischen Linsen mit den Merkmalen des Oberbegriffs des Anspruch 6 ist aus JP2011-167806 A bekannt.

Eine weitere Handhabungsvorrichtung ist aus der EP 1 736 279 A1 bekannt. Aus dieser Druckschrift ist eine Vorrichtung zum Herstellen von Brillengläsern bekannt, die einen Roboter aufweist, der die Brillengläser an deren Umfang ergreift. Zu diesem Zweck weist der Roboter einen Greifer mit drei oder mehr Fingern auf, die nach dem Polieren einer Oberfläche der Brillengläser senkrecht zu der Oberfläche gerichtet an Klemmpunkten an den Umfang angelegt werden. Die Brillengläser werden dann ausschließlich an ihren Umfangsrändern durch die Finger beaufschlagt, ohne dass diese oder ein anderes Werkzeug an den empfindlichen polierten Oberflächen angreifen müssen. Die Finger müssen hierfür einzeln oder miteinander gekoppelt bezüglich des betreffenden Brillenglases bewegt werden, wobei eine Bewegung der Finger insbesondere in Richtung des Zentrums des Brillenglases erfolgt. Eine solche Bewegung der Finger ist aufwendig und erfordert zum Teil große Verfahrlängen.

Es ist daher Aufgabe der Erfindung, eine Vorrichtung der eingangs genannten Art derart weiterzubilden, dass das Ergreifen der Brillengläser vereinfacht wird.

Erfindungsgemäß wird diese Aufgabe durch eine Vorrichtung mit den Merkmalen des Anspruchs 1 gelöst. Vorteilhafte Weiterbildungen der Erfindung sind Gegenstand der abhängigen Ansprüche. Die erfindungsgemäße Handhabungsvorrichtung kommt insbesondere im Verfahren gemäß Anspruch 6 zur Anwendung, das wiederum insbesondere im Herstellungsverfahren gemäß Anspruch 7 zur Anwendung kommt.

Der Erfindung liegt der Gedanke zugrunde, durch die Verbindung der Klemmpunkte mit den Greiferarmen und die Kopplung der Bewegung der Greiferarme relativ zueinander auf einfache Weise zu gewährleisten, dass die Klemmpunkte in der gewünschten Weise relativ zueinander und damit auch relativ zum zu ergreifenden Brillenglas bewegt werden. Erfindungsgemäß sind vier jeweils mit einem Greiferarm verbundene Klemmpunkte vorgesehen, die dann um identische Wegstrecken in Richtung zum Zentrierpunkt oder in Richtung von diesem weg bewegt werden. Dabei wird bevorzugt, dass die Klemmpunkte in konstanten Winkelabständen zueinander bezüglich des Zentrierpunkts angeordnet sind. Diese Maßnahmen ermöglichen ein zuverlässigeres Greifen der Brillengläser. Zweckmäßig spannen die Klemmpunkte eine Ebene auf, beispielsweise die Referenzebene. Auch der Zentrierpunkt kann in dieser Ebene liegen. Wird die Handhabungsvorrichtung im Raum bewegt, so bewegt sich der Zentrierpunkt mit ihr im Raum. Unter einem Greiferarm ist dabei ein bewegliches Organ eines Greifers zu verstehen, das bevorzugt eine Längserstreckung aufweist. Unter der Längserstreckung eines Gegenstands ist dessen Erstreckung in seiner Längsrichtung zu verstehen, die sich von einer Quererstreckung dadurch unterscheidet, dass sie größer ist als diese, so dass der Gegenstand eine längliche Form hat.

Die Klemmpunkte können direkt an den Greiferarmen angeordnet sein oder an Klemmbacken. Es wird jedoch bevorzugt, dass jeder der Klemmpunkte an einem sich quer im Sinne von abgewinkelt zu den Greiferarmen erstreckenden Finger angeordnet ist. Dies entweder direkt oder indirekt in dem Sinne, dass eine den Klemmpunkt aufweisende Klemmbacke am Finger angeordnet ist. Unter einem Finger ist ein langgestrecktes Organ zu verstehen, das in der Regel kleiner ist als ein Greiferarm.

Erfindungsgemäß sind die Greiferarme mittels eines Getriebes miteinander gekoppelt.

Erfindungsgemäß ist jeweils mindestens einer der Greiferarme in Richtung seiner Längserstreckung verschieblich in einem Getriebelager gelagert. Ein Getriebelager dient dabei der Lagerung mindestens eines beweglichen Bauteils, das mittels eines Getriebes bewegt wird oder selbst Teil eines Getriebes ist. Dabei wird bevorzugt, dass ein erstes Getriebelager mittels einer Antriebseinrichtung relativ zu einem zweiten Getriebelager beweglich ist. An einem Getriebelager kann die Antriebseinrichtung gut angreifen, insbesondere wenn es als Getriebegehäuse ausgebildet ist. Die Getriebelager sind zweckmäßig relativ zueinander in einer Richtung beweglich, die quer zu der Richtung ist, in der die Greiferarme in den Getriebelagern längs verschieblich sind. Als Antriebseinrichtung kommt insbesondere ein elektrischer oder pneumatischer Parallelantrieb in Frage. Werden die Getriebelager mittels der Antriebseinrichtung voneinander weg oder aufeinander zu bewegt, so resultiert dies zwangsläufig in einer Relativbewegung der Greiferarme zueinander. Zu diesem Zweck verläuft zwischen den Getriebelagern eine erste Zahnstange, die mit einem im ersten Getriebelager drehbar gelagerten ersten Zahnrad und einem im zweiten Getriebelager drehbar gelagerten weiteren ersten Zahnrad in Eingriff ist. Die Übertragung der Bewegung auf die Greiferarme erfolgt dadurch, dass jeder der Greiferarme eine Zahnstange aufweist, wobei die Zahnstangen zueinander parallel verlaufen und ihre Zähne mit den ersten Zahnrädern in Eingriff sind. Die Verwendung von Zahnstangen und Zahnrädern ermöglicht einen einfachen und zuverlässigen Aufbau eines Getriebes zum Bewegen der Greiferarme. Zur Stabilisierung der Bewegung kann zudem im Abstand zum jeweiligen ersten Zahnrad in jedem Getriebelager ein zweites Zahnrad drehbar gelagert sein, das mit der bzw. den Zahnstange(n) des zugehörigen Greiferarms bzw. der zugehörigen Greiferarme in Eingriff ist.

Bei der erfindungsgemäßen Ausführungsform mit vier jeweils an einem Greiferarm angeordneten Fingern sind die Greiferarme parallel zur Referenzebene verschieblich gelagert. Zudem sind jeweils zwei der Greiferarme gemeinsam in einem der Getriebelager gelagert und die Zähne der Zahnstangen sind in jedem der Getriebelager einander zugewandt und mit dem zugehörigen ersten Zahnrad sowie gegebenenfalls mit dem zugehörigen zweiten Zahnrad in Eingriff. Durch diese Maßnahmen wird mit einfachen mechanischen Mitteln sichergestellt, dass eine durch die Antriebseinheit erzielte Bewegung der Getriebelager relativ zueinander zu einer Längsverschiebung der Greiferarme führt, wobei jeder der Greiferarme um eine identische Strecke verschoben wird, welche zudem identisch ist mit der Strecke, um die die Getriebelager relativ zueinander bewegt werden. Da sich diese Verschiebungen in zueinander senkrecht stehenden Raumrichtungen überlagern, resultiert hieraus eine Verschiebung jedes der Finger bezüglich des Zentrierpunkts um eine Strecke, die um einen Faktor √2 größer ist. Ausreichende Verfahrwege der Finger werden somit durch einen kleineren Verfahrweg der Antriebseinheit realisiert.

Erfindungsgemäß weist der dem jeweils anderen Getriebelager abgewandte Greiferarm jedes der beiden Getriebelager ein zum anderen Getriebelager hin gebogenes freies Ende auf, die freien Enden der gemeinsam in einem Getriebelager gelagerten Greiferarme befinden sich in einer Linie, die sich parallel zur Längserstreckung der Greiferarme erstreckt, und die Finger sind an den freien Enden der Greiferarme angeordnet. Zudem erstrecken sich die Finger vorzugsweise senkrecht zur Referenzebene. In der Referenzebene sind die Finger dann jeweils im gleichen Abstand zum Zentrierpunkt angeordnet, so dass das Ergreifen der Brillengläser erleichtert wird. Die erfindungsgemäße Handhabungsvorrichtung kommt insbesondere an einem Roboter zum Einsatz, mittels dem sie zur Handhabung der Brillengläser bewegt wird, um diese in einem Herstellungsverfahren einzelnen Bearbeitungsstationen zuzuführen, an denen sie beispielsweise beschliffen werden. Dabei wird bevorzugt, dass sich die Greiferarme in der Greifvorrichtung kommt insbesondere an einem Roboter zum Einsatz, mittels dem sie zur Handhabung der Brillengläser bewegt wird, um diese in einem Herstellungsverfahren einzelnen Bearbeitungsstationen zuzuführen, an denen sie beispielsweise beschliffen werden. Dabei wird bevorzugt, dass sich die Greiferarme in der Greifposition in einer größeren Höhe befinden als das Brillenglas, so dass dieses sozusagen von oben ergriffen wird.

Im Folgenden wird die Erfindung anhand eines in der Zeichnung schematisch dargestellten Ausführungsbeispiels näher erläutert. Es zeigen
- Fig. 1: eine Vorrichtung zum Handhaben von en Brillengläsern in perspektivischer Ansicht;

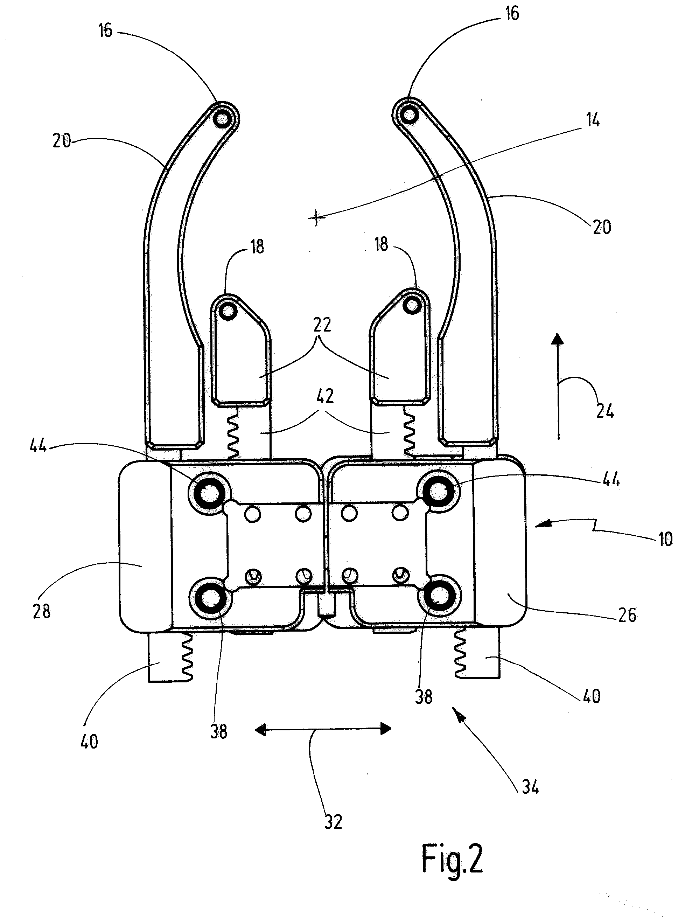

- Fig. 2: die Handhabungsvorrichtung gemäß Fig. 1 ohne Antriebseinrichtung in Draufsicht;

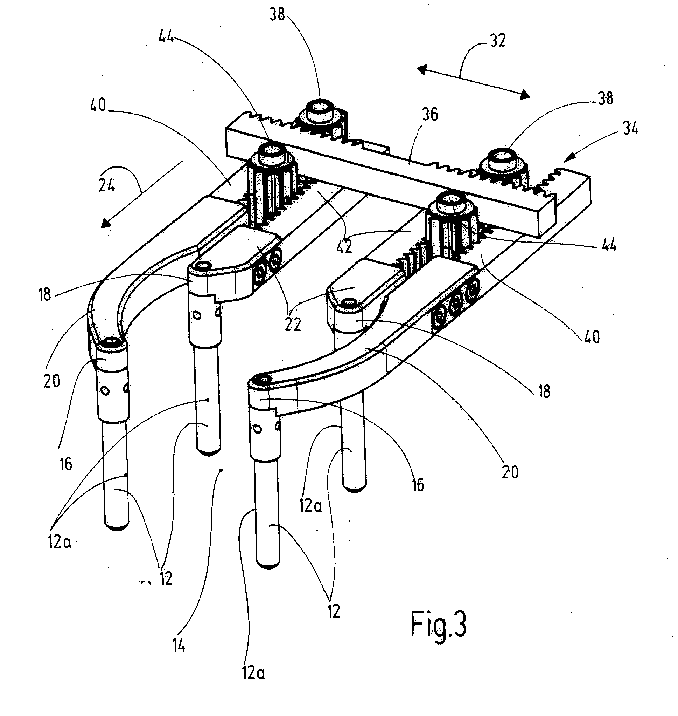

- Fig. 3: die Handhabungsvorrichtung gemäß Fig. 1 ohne Antriebseinrichtung und ohne Getriebelager in perspektivischer Ansicht und

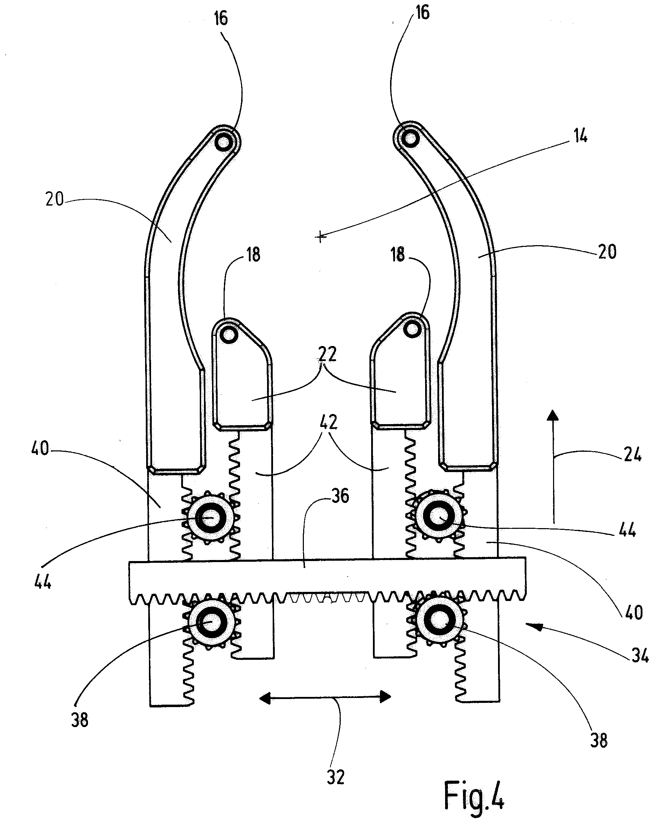

- Fig. 4: die Handhabungsvorrichtung gemäß Fig. 3 in Draufsicht.

Die in der Zeichnung dargestellte Vorrichtung 10 dient dem Handhaben von Brillengläsern und ist zu diesem Zweck typischerweise an einem Roboterarm montiert. Sie weist vier Finger 12 auf, die sich jeweils parallel zueinander und senkrecht zu einer Referenzebene erstrecken. Die Finger 12 weisen jeweils einen harten Kern sowie einen weichen Mantel auf, der den Kern rings umhüllt und an einem Klemmpunkt 12a zur Anlage am Umfangsrand eines Brillenglases bestimmt ist. Die Klemmpunkte 12a sind in der Referenzebene in etwa gleichen Abständen zu einem Zentrierpunkt 14 angeordnet und befinden sich annähernd auf einer Kreislinie um den Zentrierpunkt 14. Sie sind zudem auf dieser Kreislinie in ungefähr gleichen Winkelabständen zueinander angeordnet.

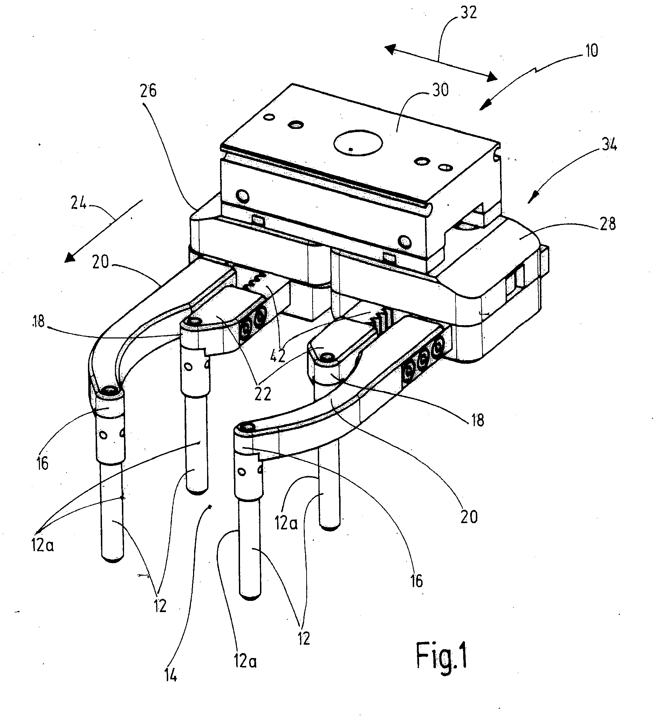

Jeder der Finger 12 ist dabei an einem freien Ende 16, 18 eines Greiferarms 20, 22 angeordnet, wobei die vier Greiferarme 20, 22 jeweils eine Längserstreckung 24 aufweisen, welche im Wesentlichen parallel zur Referenzebene ist. Jeweils ein äußerer Greiferarm 20 und ein innerer Greiferarm 22 sind zusammen in einem als sie abschnittsweise umschließendes Getriebegehäuse ausgebildetes Getriebelager 26, 28 in ihrer Längserstreckung 24 verschieblich gelagert. Dabei ist ein erstes Getriebelager 26 in Fig. 1 links, ein zweites Getriebelager 28 in Fig. 1 rechts gezeigt. Die Greiferarme 20, 22 sind jeweils in einer Richtung parallel zur Referenzebene beweglich.

Die Bewegung der Greiferarme 20, 22 erfolgt mittels einer Antriebseinrichtung 30 in Form eines pneumatischen Parallelantriebs, der an den Getriebelagern 26, 28 angreift und diese in einer Richtung 32 bewegt, die im Wesentlichen senkrecht zur Längserstreckung 24 der Greiferarme 20, 22 ist, und eines Getriebes 34. Das Getriebe 34 weist eine zwischen den Getriebelagern 26, 28 verlaufende erste Zahnstange 36 sowie in jedem Getriebelager 26, 28 ein drehbar gelagertes, mit der ersten Zahnstange 36 in Eingriff befindliches erstes Zahnrad 38 auf. Desweiteren weist das Getriebe 34 fest mit den Greiferarmen 20, 22 verbundene, jeweils mit einem der ersten Zahnräder 38 in Eingriff befindliche und sich in der Längserstreckung 24 erstreckende Zahnstangen 40, 42 auf. Dabei weist jeder äußere Greiferarm 20 eine äußere Zahnstange 40 und jeder innere Greiferarm 22 eine innere Zahnstange 42 auf, und in jedem der Getriebelager 26, 28 sind die Zähne der äußeren Zahnstange 40 den Zähnen der inneren Zahnstange 42 zugewandt. Zur Stabilisierung weist das Getriebe 34 in jedem der Getriebelager 26, 28 zudem noch ein im Abstand zum jeweiligen ersten Zahnrad 38 drehbar angeordnetes, mit der betreffenden äußeren Zahnstange 40 und der betreffenden inneren Zahnstange 42 in Eingriff befindliches zweites Zahnrad 44 auf.

Die freien Enden 16 der äußeren Greiferarme 20 sind so aufeinander zu gebogen, dass die an ihnen befestigten Finger 12 sich jeweils in einer Linie mit den an den freien Enden 18 der inneren Greiferarme 22 befestigten Finger 12 befinden, welche zumindest ungefähr parallel zur Längserstreckung 24 der Greiferarme 20, 22 verläuft.

Zum Handhaben von Brillengläsern werden die Finger 12 durch Betätigung der Antriebseinrichtung 30 relativ zueinander bewegt. Um den Abstand zwischen den Klemmpunkten 12a zu erhöhen, bewegt die Antriebseinrichtung 30 die Getriebelager 26, 28 derart, dass sich deren Abstand zueinander vergrößert. Mittels der ersten Zahnstange 36 wird diese Bewegung auf die ersten Zahnräder 38 übertragen, die die Bewegung wiederum auf die äußeren und inneren Zahnstangen 40, 42 übertragen. Die Greiferarme 20, 22 bewegen sich dadurch in beiden Raumrichtungen parallel zur Referenzebene jeweils um die gleiche Strecke, um die sich der Abstand der Getriebelager 26, 28 zueinander vergrößert. Bezüglich des Zentrierpunkts 14 bewegen sich somit die Klemmpunkte 12a um eine Wegstrecke, die um den Faktor √2 größer ist als die Wegstrecke, um die sich die Getriebelager 26, 28 zueinander bewegen. Zum Ergreifen der Brillengläser werden die Finger rings um den Umfangsrand des jeweiligen Brillenglases positioniert, wobei sich der Mittelpunkt des Brillenglases zweckmäßig ungefähr im Zentrierpunkt befindet. Zu diesem Zweck bewegt ein Roboter die Handhabungsvorrichtung 10 in eine Greifposition, in der die Referenzebene durch das Brillenglas verläuft und dieses an seinem Umfangsrand schneidet. Die Antriebseinrichtung 30 bewegt dann die Getriebelager 26, 28 aufeinander zu, so dass die Klemmpunkte 12a auf den Zentrierpunkt 14 zu bewegt werden und dabei jeweils eine Strecke zurücklegen, die um den Faktor √2 größer ist als die Strecke, um die Getriebelager 26, 28 zueinander bewegt werden. Die Finger 12 werden solange bewegt, bis alle Klemmpunkte 12a am Umfangsrand des jeweiligen Brillenglases anliegen, wobei dieses zwischen den Klemmpunkten 12a zentriert und eingeklemmt wird, so dass es hochgehoben werden kann, ohne dass hierzu die optisch wirksamen Flächen berührt werden müssen. Insbesondere können so Brillengläser bei ihrer Herstellung von einer Bearbeitungsstation zur nächsten oder zu einer Lager- bzw. Verpackungsstation verbracht werden.

## Patentansprüche

1. Vorrichtung zum Handhaben von Brillengläsern mit vier Klemmpunkten (12a) zum Ergreifen der Brillengläser an ihren Umfangsrändern, wobei die Klemmpunkte (12a) jeweils fest mit einem Greiferarm (20, 22) verbunden sind und wobei die Greiferarme (20, 22) jeweils in einer Richtung parallel zu einer Referenzebene relativ zueinander beweglich sind, wobei die Greiferarme (20, 22) so miteinander gekoppelt sind, dass eine Bewegung jedes der Greiferarme (20, 22) relativ zu mindestens einem der anderen Greiferarme (20, 22) in einer Bewegung der mit ihnen verbundenen Klemmpunkte (12a) um identische Wegstrecken in Richtung zu einem Zentrierpunkt (14) oder in Richtung von diesem weg resultiert, wobei die Greiferarme (20, 22) mittels eines Getriebes (34) miteinander gekoppelt sind, wobei jeweils mindestens einer der Greiferarme (20, 22) in Richtung seiner Längserstreckung (24) verschieblich in einem Getriebelager (26, 28) gelagert ist, wobei vier jeweils an einem Greiferarm (20, 22) angeordnete Finger (12) vorgesehen sind, wobei jeweils zwei der Greiferarme (20, 22) in einer Richtung parallel zur Referenzebene verschieblich gelagert sind, wobei zwischen den Getriebelagern (26, 28) eine erste Zahnstange (36) verläuft, die mit einem in einem ersten Getriebelager (26) drehbar gelagerten ersten Zahnrad (38) und einem in einem zweiten Getriebelager (28) drehbar gelagerten weiteren ersten Zahnrad (38) in Eingriff ist, wobei jeder der Greiferarme (20, 22) eine Zahnstange (40, 42) aufweist, wobei die Zahnstangen (40, 42) zueinander parallel verlaufen und ihre Zähne mit den ersten Zahnrädern (38) in Eingriff sind, wobei jeweils zwei der Greifer (20, 22) verschieblich in einem der Getriebelager (26, 28) gelagert sind und wobei die Zähne der Zahnstangen (40, 42) in jedem der Getriebelager (26, 28) einander zugewandt und mit dem zugehörigen ersten Zahnrad (38) sowie gegebenenfalls mit dem zugehörigen zweiten Zahnrad (44) in Eingriff sind, **dadurch gekennzeichnet, dass** der dem jeweils anderen Getriebelager (26, 28) abgewandte Greiferarm (20) jedes der beiden Getriebelager (26, 28) ein zum anderen Getriebelager (26, 28) hin gebogenes freies Ende (16) aufweist, dass sich die freien Enden (16, 18) der gemeinsam in einem Getriebelager (26, 28) gelagerten Greiferarme (20, 22) in einer Linie befinden, die sich parallel zur Längserstreckung (24) der Greiferarme (20, 22) erstreckt, und dass die Finger (12) an den freien Enden (16, 18) der Greiferarme (20, 22) angeordnet sind.

2. Vorrichtung nach Anspruch 1, **dadurch gekennzeichnet, dass** jeder der Klemmpunkte (12a) an einem sich quer zu den Greiferarmen (20, 22) erstreckenden Finger (12) angeordnet ist.

3. Vorrichtung nach Anspruch 1 oder 2, **dadurch gekennzeichnet, dass** das erste Getriebelager (26) mittels einer Antriebseinrichtung (30) relativ zum zweiten Getriebelager (28) beweglich ist.

4. Vorrichtung nach Anspruch 3, **dadurch gekennzeichnet, dass** die Getriebelager (26, 28) relativ zueinander in einer Richtung (32) beweglich sind, die quer zu der Richtung (24) ist, in der die Greiferarme (20, 22) in den Getriebelagern (26, 28) längsverschieblich sind.

5. Vorrichtung nach einem der vorangehenden Ansprüche, **dadurch gekennzeichnet, dass** im Abstand zum jeweiligen ersten Zahnrad (38) in jedem Getriebelager (26, 28) ein zweites Zahnrad (44) drehbar gelagert ist, das mit der bzw. den Zahnstange(n) (40, 42) des zugehörigen Greiferarms (20, 22) bzw. der zugehörigen Greiferarme (20, 22) in Eingriff ist.

6. Verfahren zur Handhabung von Brillengläsern mit einer Handhabungsvorrichtung (10), welche mindestens drei Klemmpunkte (12a) zum Ergreifen der Brillengläser an ihren Umfangsrändern aufweist, wobei die Handhabungsvorrichtung (10) bezüglich eines Brillenglases in eine Greifposition bewegt wird, in der sie durch Anlage der Klemmpunkte (12a) an einem Umfangsrand des Brillenglases dieses ergreift, und wobei die Handhabungsvorrichtung (10) mit dem Brillenglas zu einer Endposition bewegt wird, in der das Brillenglas abgelegt wird und die Klemmpunkte (12a) von seinem Umfangsrand zurückgezogen werden, wobei die Klemmpunkte (12a) jeweils fest mit einem Greiferarm (20, 22) verbunden sind und wobei die Greiferarme (20, 22) jeweils in einer Richtung parallel zu einer Referenzebene relativ zueinander beweglich sind, **dadurch gekennzeichnet, dass** die Greiferarme (20, 22) so miteinander gekoppelt sind, dass eine Bewegung jedes der Greiferarme (20, 22) relativ zu mindestens einem der anderen Greiferarme (20, 22) in einer Bewegung der mit ihnen verbundenen Klemmpunkte (12a) um identische Wegstrecken in Richtung zu einem Zentrierpunkt (14) oder in Richtung von diesem weg resultiert, und dass die Greiferarme (20, 22) zum Ergreifen des Brillenglases bewegt werden, bis alle Klemmpunkte (12a) am Umfangsrand anliegen und diesen in Richtung zum Zentrierpunkt (14) mit Kraft beaufschlagen.

7. Verfahren zur Herstellung von Brillengläsern, wobei die Brillengläser jeweils einzeln von einer ersten Position in mindestens eine weitere Position bewegt werden und in mindestens einer der Positionen mindestens einem Bearbeitungsschritt unterzogen werden, **dadurch gekennzeichnet, dass** zum Verbringen der Brillengläser von der ersten Position in die mindestens eine weitere Position ein Handhabungsverfahren nach Anspruch 6 zur Anwendung kommt.

## Claims

1. Device for handling spectacle lenses, having four clamping points (12a) for gripping the spectacle lenses on their circumferential edges, wherein the clamping points (12a) are each firmly connected to a gripper arm (20, 22), and wherein the gripper arms (20, 22) are each movable relative to one another in one direction parallel to a reference plane, wherein the gripper arms (20, 22) are coupled to one another in such a way that a movement of each of the gripper arms (20, 22) relative to at least one of the other gripper arms (20, 22) results in a movement of the clamping points (12a) connected to them through identical distances in a direction towards a centring point (14) or in a direction away therefrom, wherein the gripper arms (20, 22) are coupled to one another by means of a gearing (34), wherein at least one of the gripper arms (20, 22) is respectively mounted displaceably in the direction of its longitudinal extent (24) in a gearing support (26, 28), wherein four fingers (12) respectively arranged on a gripper arm (20, 22) are provided, wherein two of the gripper arms (20, 22) are in each case mounted displaceably in a direction parallel to the reference plane, wherein a first rack (36), which is engaged with a first pinion (38) mounted rotatably in a first gearing support (26) and a further first pinion (38) mounted rotatably in a second gearing support (28), runs between the gearing supports (26, 28), wherein each of the gripper arms (20, 22) has a rack (40, 42), wherein the racks (40, 42) run parallel to one another and their teeth are engaged with the first pinions (38), wherein two of the grippers (20, 22) are in each case mounted displaceably in one of the gearing supports (26, 28) and wherein the teeth of the racks (40, 42) face towards one another in each of the gearing supports (26, 28) and are engaged with the associated first rack (38) and optionally with the associated second rack (44), **characterized in that** the gripper arm (20) of each of the two gearing supports (26, 28) that faces away from the respectively other gearing support (26, 28) has a free end (16) curved towards the other gearing support (26, 28), **in that** the free ends (16, 18) of the gripper arms (20, 22) mounted together in a gearing support (26, 28) are in a line that extends parallel to the longitudinal extent (24) of the gripper arms (20, 22), and **in that** the fingers (12) are arranged on the free ends (16, 18) of the gripper arms (20, 22).

2. Device according to Claim 1, **characterized in that** each of the clamping points (12a) is arranged on a finger (12) extending transversely with respect to the gripper arms (20, 22).

3. Device according to Claim 1 or 2, **characterized in that** the first gearing support (26) is movable relative to the second gearing support (28) by means of a drive instrument (30).

4. Device according to Claim 3, **characterized in that** the gearing supports (26, 28) are movable relative to one another in a direction (32) that is transverse with respect to the direction (24) in which the gripper arms (20, 22) are longitudinally displaceable in the gearing supports (26, 28).

5. Device according to one of the preceding claims, **characterized in that** a second pinion (44), which is engaged with the rack(s) (40, 42) of the associated gripper arm (20, 22) or of the associated gripper arms (20, 22), is mounted rotatably at a spacing from the respective first pinion (38) in each gearing support (26, 28).

6. Method for handling spectacle lenses with a handling device (10) which has at least three clamping points (12a) for gripping the spectacle lenses on their circumferential edges, wherein the handling device (10) is moved in relation to a spectacle lens into a gripping position in which it grips the spectacle lens by the clamping points (12a) bearing on a circumferential edge of said spectacle lens, and wherein the handling device (10) is moved with the spectacle lens into a final position in which the spectacle lens is put down and the clamping points (12a) are retracted from its circumferential edge, wherein the clamping points (12a) are each firmly connected to a gripper arm (20, 22) and wherein the gripper arms (20, 22) are each movable relative to one another in a direction parallel to a reference plane, **characterized in that** the gripper arms (20, 22) are coupled to one another in such a way that a movement of each of the gripper arms (20, 22) relative to at least one of the other gripper arms (20, 22) results in a movement of the clamping points (12a) connected to them through identical distances in a direction towards a centring point (14) or in a direction away from the latter, and **in that** the gripper arms (20, 22) are moved in order to grip the spectacle lens until all the clamping points (12a) bear on the circumferential edge and exert a force in the direction of the centring point (14) thereon.

7. Method for producing spectacle lenses, wherein the spectacle lenses are respectively moved individually from a first position into at least one further position and are subjected in at least one of the positions to at least one processing step, **characterized in that** a handling method according to Claim 6 is employed in order to bring the spectacle lenses from the first position into the at least one further position.

## Revendications

1. Dispositif permettant de manipuler des verres de lunettes, comprenant quatre points de serrage (12a) pour saisir les verres de lunettes au niveau de leurs bords périphériques, dans lequel les points de serrage (12a) sont respectivement reliés solidement à un bras de préhension (20, 22), et dans lequel les bras de préhension (20, 22) sont mobiles l'un par rapport à l'autre respectivement dans une direction parallèle à un plan de référence, dans lequel les bras de préhension (20, 22) sont couplés l'un à l'autre de telle sorte qu'un mouvement de chacun des bras de préhension (20, 22) par rapport à au moins l'un des autres bras de préhension (20, 22) produit un mouvement des points de serrage (12a) reliés à ceux-ci sur des trajets identiques en direction d'un point de centrage (14) ou dans une direction qui s'en éloigne, dans lequel les bras de préhension (20, 22) sont couplés les uns aux autres au moyen d'un mécanisme (34), dans lequel respectivement au moins l'un des bras de préhension (20, 22) est monté mobile dans la direction de son étendue longitudinale (24) dans un palier de mécanisme (26, 28), dans lequel quatre doigts (12) disposés respectivement sur un bras de préhension (20, 22) sont prévus, dans lequel respectivement deux des bras de préhension (20, 22) sont montés mobiles dans une direction parallèle au plan de référence, dans lequel entre les paliers de mécanisme (26, 28) s'étend une première crémaillère (36) qui est en prise avec une première roue dentée (38) montée en rotation dans un premier palier de mécanisme (26) et avec une autre première roue dentée (38) montée en rotation dans un deuxième palier de mécanisme (28), dans lequel chacun des bras de préhension (20, 22) présente une crémaillère (40, 42), dans lequel les crémaillères (40, 42) s'étendent en parallèle l'une à l'autre et leurs dents sont en prise avec les premières roues dentées (38), dans lequel respectivement deux des préhenseurs (20, 22) sont montés mobiles dans l'un des paliers de mécanisme (26, 28), et dans lequel les dents des crémaillères (40, 42) dans chacun des paliers de mécanisme (26, 28) sont tournées les unes vers les autres et sont en prise avec la première roue dentée associée (38), ainsi que le cas échéant avec la deuxième roue dentée (44) associée,
**caractérisé en ce que** le bras de préhension (20), détourné de l'autre palier de mécanisme (26, 28) respectivement, de chacun des deux paliers de mécanisme (26, 28) présente une extrémité libre (16) pliée vers l'autre palier de mécanisme (26, 28), **en ce que** les extrémités libres (16, 18) des bras de préhension (20, 22) montés ensemble dans un palier de mécanisme (26, 28) se trouvent sur une ligne qui s'étend en parallèle à l'étendue longitudinale (24) des bras de préhension (20, 22), et **en ce que** les doigts (12) sont disposés aux extrémités libres (16, 18) des bras de préhension (20, 22) .

2. Dispositif selon la revendication 1, **caractérisé en ce que** chacun des points de serrage (12a) est disposé sur un doigt (12) s'étendant transversalement aux bras de préhension (20, 22).

3. Dispositif selon la revendication 1 ou 2, **caractérisé en ce que** le premier palier de mécanisme (26) est mobile par rapport au deuxième palier de mécanisme (28) au moyen d'un dispositif d'entraînement (30).

4. Dispositif selon la revendication 3, **caractérisé en ce que** les paliers de mécanisme (26, 28) sont mobiles l'un par rapport à l'autre dans une direction (32) qui est transversale à la direction (24) dans laquelle les bras de préhension (20, 22) sont mobiles de manière longitudinale dans les paliers de mécanisme (26, 28).

5. Dispositif selon l'une quelconque des revendications précédentes, **caractérisé en ce qu'**à distance de la première roue dentée (38) respective, dans chaque palier de mécanisme (26, 28), une deuxième roue dentée (44) est montée en rotation et est en prise avec la ou les crémaillère(s) (40, 42) du bras de préhension (20, 22) associé ou des bras de préhension (20, 22) associés.

6. Procédé permettant de manipuler des verres de lunettes à l'aide d'un dispositif de manipulation (10) qui présente au moins trois points de serrage (12a) pour saisir les verres de lunettes au niveau de leurs bords périphériques, dans lequel le dispositif de manipulation (10) est déplacé par rapport à un verre de lunettes dans une position de préhension dans laquelle il saisit le verre de lunettes en appliquant les points de serrage (12a) contre un bord périphérique de celui-ci, et dans lequel le dispositif de manipulation (10) avec le verre de lunettes est déplacé jusqu'à une position d'extrémité dans laquelle le verre de lunettes est déposé et les points de serrage (12a) sont retirés de son bord périphérique, dans lequel les points de serrage (12a) sont respectivement reliés solidement à un bras de préhension (20, 22), et dans lequel les bras de préhension (20, 22) sont mobiles l'un par rapport à l'autre respectivement dans une direction parallèle à un plan de référence,
**caractérisé en ce que** les bras de préhension (20, 22) sont couplés l'un à l'autre de telle sorte qu'un mouvement de chacun des bras de préhension (20, 22) par rapport à au moins l'un des autres bras de préhension (20, 22) produit un mouvement des points de serrage (12a) reliés à ceux-ci sur des trajets identiques en direction d'un point de centrage (14) ou dans une direction qui s'en éloigne, et **en ce que** les bras de préhension (20, 22) sont déplacés pour saisir le verre de lunettes jusqu'à ce que tous les points de serrage (12a) soient appliqués contre le bord périphérique et exercent une force sur celui-ci en direction du point de centrage (14) .

7. Procédé de fabrication de verres de lunettes, dans lequel les verres de lunettes sont déplacés respectivement individuellement d'une première position à au moins une autre position et sont soumis à au moins une étape de traitement dans au moins l'une des positions, **caractérisé en ce qu'**un procédé de manipulation selon la revendication 6 est mis en œuvre pour amener les verres de lunettes de la première position à ladite au moins une autre position.
